Europäisches Patentamt

European Patent Office

Office européen des brevets

(19)

(11) Numéro de publication: **0 431 688 A1**

# (12) DEMANDE DE BREVET EUROPEEN

(21) Numéro de dépôt: 90203161.6

(22) Date de dépôt: 30.11.90

(51) Int. Cl.⁵: **G06F 13/40**

(30) Priorité: 05.12.89 FR 89161042

(43) Date de publication de la demande:
**12.06.91 Bulletin 91/24**

(84) Etats contractants désignés:
**DE FR GB IT**

(71) Demandeur: **PHILIPS ELECTRONIQUE GRAND PUBLIC**
**51, Rue Carnot**
**F-92150 Suresnes(FR)**

(84) **FR**

Demandeur: **N.V. Philips'**

**Gloeilampenfabrieken**
**Groenewoudseweg 1**
**NL-5621 BA Eindhoven(NL)**

(84) **DE GB IT**

(72) Inventeur: **Bendahan, Samuel**
**Societe Civile S.P.I.D., 156 Bd Haussmann**
**F-75008 Paris(FR)**

(74) Mandataire: **Caron, Jean et al**
**Société Civile S.P.I.D. 156, Boulevard**
**Haussmann**
**F-75008 Paris(FR)**

(54) **Dispositif pour transférer des données.**

(57) Dispositif pour transférer des données entre deux modules 5, 6 dans un système à microprocesseur muni d'une unité centrale 1 avec un agencement de bus d'adresse et de données 8, 9, 10, connecté à l'unité centrale 1 et à une mémoire 4 de codes opératoires, ainsi qu'aux deux modules 5, 6.

Le dispositif comporte un interrupteur 7 pour couper le bus de données en deux segments respectivement 13 relié aux deux modules et 8 relié au reste du système, et des moyens 2 pour commander le transfert entre les modules quel que soit le code opératoire présent sur le bus de données 8 à la sortie de la mémoire de codes opératoires. Ces moyens sont constitués par un circuit logique combinatoire, qui est muni d'un décodeur d'adresse relié au bus d'adresse 10, et qui, lorsqu'il reconnait une adresse particulière sur ce bus, intervertit les commandes de lecture $\overline{OE}$ et d'écriture $\overline{WE}$ de l'un des modules par rapport à celles de l'autre, active leur connexion de sélection $\overline{CS}$ et commande aussi l'ouverture de l'interrupteur 7. Le processeur a alors pour seul rôle d'incrémenter les adresses appliquées aux entrées d'adresse A des deux modules.

Application: L'invention s'applique notamment aux systèmes à microprocesseur utilisés dans des automates de toute nature, pour la commande d'appareils professionnels ou d'appareils de loisirs tel que des systèmes audio-video.

## "DISPOSITIF POUR TRANSFERER DES DONNEES"

La présente invention concerne un dispositif pour transférer des données entre deux modules dans un système à microprocesseur muni d'une unité centrale avec un agencement de bus d'adresses et de données connecté à l'unité centrale et à une mémoire de codes opératoires, ainsi qu'aux deux modules, dispositif muni d'un interrupteur pour couper le bus de données, et de moyens distincts de ceux de l'unité centrale pour commander le transfert entre les modules.

L'invention s'applique notamment aux systèmes à microprocesseur utilisés dans des automates de toute nature, pour la commande d'appareils professionnels ou d'appareils de loisirs tel que des systèmes audio-video.

Un dispositif selon le préambule ci-dessus est connu de JP Kokai 62-35950. Il présente l'avantage que, pour l'incrémentation de l'adresse dans les modules, incrémentation destinée à la lecture et à l'écriture d'une série de données placées à la suite les unes des autres, on utilise l'unité centrale pour incrémenter l'adresse sur le bus pendant les transferts, la même adresse étant ainsi présentée aux deux modules fonctionnels en même temps, et on évite les conflits qui devraient en résulter, grâce essentiellement à l'interrupteur sur le bus de données. Dans le dispositif décrit par ce document, cet interrupteur est placé de façon à isoler l'unité centrale du reste du système, et les moyens distincts de ceux de l'unité centrale pour commander le transfert entre les modules sont assez complexes et doivent notamment comporter un générateur pour fournir des codes inactifs à l'unité centrale pendant l'opération de transfert.

L'invention se propose de procurer un dispositif basé sur le même principe et présentant les mêmes avantages de vitesse, mais dont la réalisation soit plus simple.

Cela est obtenu du fait que ledit interrupteur est placé entre le groupe des deux modules d'une part, et le groupe constitué de l'unité centrale et de la mémoire de codes opératoires d'autre part.

Ainsi la mémoire de codes opératoires reste reliée à l'unité centrale, ce qui permet de se passer d'un générateur de codes inactifs lorsque ladite mémoire des codes opératoires contient des codes opératoires inactifs dans les positions correspondant aux adresses présentes sur le bus d'adresses pendant l'opération de transfert.

Une vitesse particulièrement élevée des transferts peut être obtenue en outre lorsque les susdits moyens distincts de ceux de l'unité centrale pour commander le transfert entre les modules réalisent à la fois la commande de lecture de l'un des modules et la commande d'écriture de l'autre et l'ouverture de l'interrupteur, ces moyens étant constitués par un circuit de logique combinatoire.

Un tel circuit de logique combinatoire est de réalisation très simple et en outre l'interversion des commandes de lecture et d'écriture de l'un des modules par rapport à celles de l'autre permet que l'un des modules puisse être lu pendant que l'on écrit dans l'autre ce qui divise par deux les temps de transfert.

Avantageusement, ce circuit est muni d'un décodeur d'adresse relié au bus d'adresse. Ainsi la présentation d'une adresse particulière suffit à déclencher la mise en action du circuit et par conséquent les transferts.

Pour que ceci soit possible sans aucun inconvénient, le décodeur d'adresse du circuit de logique combinatoire est en outre relié seulement à certains fils du bus d'adresse, et les deux modules sont reliés seulement aux autres fils de ce bus d'adresse.

La description qui va suivre, en regard des dessins annexés décrivant des exemples non limitatifs fera bien comprendre comment l'invention peut être réalisée.

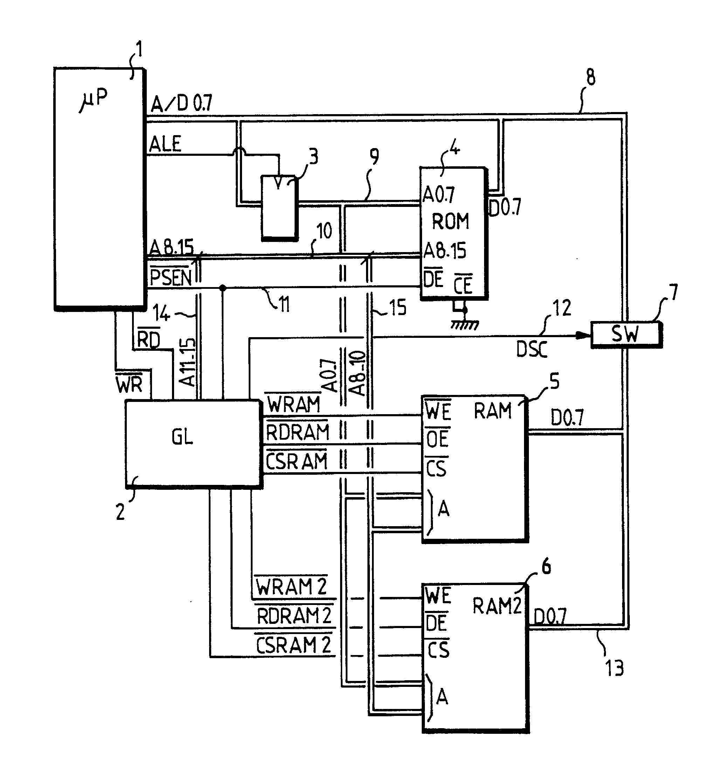

La figure unique représente schématiquement l'organisation d'un système muni d'un dispositif selon l'invention.

Pour simplifier la figure seuls les éléments indispensables à la compréhension de l'invention ont été représentés. Une unité centrale 1 comprend des éléments logiques habituels (non représentés) tels que des registres, une horloge et un compteur de programme, une unité arithmétique. Une mémoire 4 non inscriptible (dite ROM) contient les codes opéra-toires de programme: des adresses incrémentées à chaque temps de cycle lui sont présentées et à chaque fois un code y est lu, dont la séquence constitue en principe le programme exécuté par le système (en principe, puis-qu' avec le dispositif de l'invention cela n'est plus vrai).

Deux modules 5 et 6 sont des mémoires ou comportent des mémoires, et on se propose de transférer des données entre ces mémoires, le plus vite possible. Dans l'exemple décrit ci-après, l'unité centrale peut être celle d'un microprocesseur de type 8031, le module 5 peut être une mémoire volatile (dite RAM) du système et le module 6 être une autre mémoire volatile (notée RAM2). Chacune de ces mémoires peut être un registre, par exemple pour échanger des données avec un périphérique, ou n'importe quel autre usage. Il est évident que l'invention pourrait aussi bien s'appliquer à n'importe quel types de modules ou à un microprocesseur différent.

Le microprocesseur 1 utilise des adresses à seize bits et des données à huit bits. Il est prévu un bus mixte 8 à huit conducteurs, qui porte parfois huit bits de données (D) et parfois les huit bits d'adresse de poids faible (A 0-7). Le bus 8 est relié à un circuit 3 dit "latch" qui a pour but de mémoriser les bits de poids faible d'une adresse à un certain moment, et qui délivre ces bits mémorisés sur un bus 9 qui est relié à l'entrée d'adresse A 0-7 de la mémoire ROM 4, et aux entrées d'adresse de poids faible des modules 5 et 6. La mémorisation est déclenchée par l'unité centrale sur une connexion notée ALE ("Adress Latch Enable").

Le microprocesseur 1 utilise aussi un autre bus 10 qui porte les huit bits d'adresse de poids fort (A 8-15). Ce bus est relié directement à la mémoire 4, et aux entrées d'adresse de poids fort des modules 5 et 6. Les entrées d'adresse des modules 5 et 6 sont reliées aux bus 9 et 10.

Le bus 8 étant aussi un bus de données, il est relié à la sortie de données (c'est-à-dire de codes opératoires) D 0-7 de la mémoire 4. La fourniture de ces codes est déclenchée par l'unité centrale sur une connexion $\overline{PSEN}$ ("Program Store ENable").

L'unité centrale 1 est munie de connexions de commande de lecture et d'écriture ("strobes") $\overline{RD}$ et $\overline{WR}$. Dans l'art antérieur la connexion $\overline{RD}$ serait reliée aux entrées $\overline{WE}$, et la connexion $\overline{WR}$ serait reliée aux entrées $\overline{OE}$, des deux modules 5 et 6. Le système est muni ici d'un circuit 2 qui gère les entrée-sorties des deux modules. A cette fin, il possède une entrée reliée au bus d'adresse A 8-15, deux entrées reliées respectivement aux connexions $\overline{RD}$ et $\overline{WR}$, et une entrée reliée à la connexion $\overline{PSEN}$, et un premier jeu de sorties $\overline{WRAM}$, $\overline{RDRAM}$, $\overline{CSRAM}$ reliées respectivement aux entrées $\overline{WE}$, $\overline{OE}$, $\overline{CS}$ du module 5 (RAM) et un deuxième jeu de sorties $\overline{WRAM2}$, $\overline{RDRAM2}$, $\overline{CSRAM2}$ reliées respectivement aux entrées $\overline{WE}$, $\overline{OE}$, $\overline{CS}$ du module 6 (RAM2). Le circuit 2 sera décrit en détail plus loin.

Les bornes d'entrée-sortie de données des modules 5 et 6 sont reliées à un bus 13 qui dans l'art antérieur serait le bus 8, mais en est ici séparé par un interrupteur 7. Il s'agit d'un interrupteur électronique pour huit connexions. Pour commander cet interrupteur, le circuit 2 lui est relié par une connexion 12 (DSC). Il va de soi qu'un microprocesseur organisé avec des bus séparés pour les adresses A0-7 et pour les données pourrait aussi bien être utilisé, sans que cela modifie l'invention. Alors l'interrupteur 7 serait placé sur le bus de données.

La commande du transfert de données peut avantageusement être donnée par l'unité centrale au moyen de la présentation d'une adresse particulière. Celle-ci est reconnue par le circuit 2 qui prend alors en charge le transfert des données. A la même adresse de la mémoire ROM débute une séquence de codes opératoires "inactifs" en nombre égal au nombre des données à transférer, suivies d'une instruction de retour de sous-programme.

Le dispositif fonctionne de la manière suivante: lorsqu'une adresse particulière est reconnue par le circuit 2, celui-ci ouvre l'interrupteur 7, met en état actif les deux modules (entrées $\overline{CS}$), et met par exemple en lecture le module 6 et en écriture le module 5 (Le circuit 2 intervertit donc les commandes de lecture et d'écriture de l'un des modules par rapport à celles de l'autre). Le choix du module lu et du module inscrit peut par exemple dépendre de l'adresse fictive qui a été présentée sur le bus d'adresse, d'une façon qui sera décrite plus en détail avec la définition du circuit 2. Après ces opérations, à chaque fois que le processeur cherche un code opératoire ("fetch opcode"), c'est-à-dire au rythme de l'horloge de l'unité centrale, les adresses sont incrémentées sur le bus d'adresse commun, et pour chaque adresse, la donnée contenue à la position correspondant à cette adresse dans le module 6 (RAM2) est lue et, dans le même temps de cycle, inscrite dans la position du module 5 (RAM) correspondant à la même adresse, en transitant par le bus 13 qui est isolé du bus de données 8 desservant le reste du système (pour mémoire, dans l'art antérieur, on accède aux modules 4, 5, 6 tour à tour et c'est pourquoi on peut utiliser le même bus de données, mais c'est beaucoup plus long). Les codes issus de la mémoire 4 qui sont présentés sur le bus 8 sont ignorés par l'ensemble des éléments 2, 5, 6. Pour ce qui est du reste du système, les codes choisis sont inactifs, ainsi que cela a été indiqué plus haut, c est-à-dire tels qu'ils ne modifient pas le fonctionnement de l'unité centrale. Dans le cas particulier du microprocesseur 8031, l'adresse est incrémentée deux fois par temps de cycle, et deux données sont donc transférées à chaque temps, alors que dans l'art antérieur il fallait cinq temps de cycle par donnée, avec ce même microprocesseur.

Le circuit 2 va maintenant être défini plus en détail. L'homme du métier peut aisément imaginer la constitution d'un circuit à partir de ses équations logiques. Le circuit 2 sera donc décrit au moyen des équations logiques définissant les signaux qu'il fournit.

Le matériel détermine quatre valeurs logiques B0, B1, B2, B3 définies en fonction des signaux présents sur les fils A 11, A 12, A 14 et A 15 du bus d'adresse A 8-15, par exemple selon les équations:

$$B0 = \overline{A15} . \overline{A14} . \overline{A12} . \overline{A11}$$
$$B1 = \overline{A15} . \overline{A14} . \overline{A12} . \overline{A11}$$
$$B2 = \overline{A15} . \overline{A14} . \overline{A12} . \overline{A11}$$
$$B3 = \overline{A15} . \overline{A14} . \overline{A12} . \overline{A11}$$

Le matériel réalisant ces équations dans le circuit 2 est donc un décodeur d'adresse. Ce circuit 2 est ainsi commandé par une adresse sur les fils A11 à A15 du bus 10. Pour éviter tout conflit d'adresse, seuls les fils A11 à A15 du bus d'adresse sont amenés au circuit 2 et les fils restants, à savoir A0 à A10, sont amenés aux modules 5 et 6. Ces derniers ont donc une capacité limitée, par exemple à 2048 positions dans le cas décrit ici où il reste onze fils d'adresse pour les modules. Ceci ne présente pas d'inconvénient majeur dans le cas où les dits modules sont des mémoires particulières, telles que des registres de travail ou d'interface.

Le circuit 2 délivre à partir des valeurs B0 à B3 définies ci dessus, les signaux suivants:

$$\overline{DSC} = \overline{B1} + \overline{B2}$$
$$\overline{RDRAM} = \overline{B0} . \overline{RD} + \overline{B1} . \overline{PSEN}$$
$$\overline{WRAM} = \overline{B0} . \overline{WR} + \overline{B2} . \overline{PSEN}$$
$$\overline{CSRAM} = \overline{B0} + \overline{B1} + \overline{B2}$$
$$\overline{RDRAM2} = \overline{B3} . \overline{RD} + \overline{B2} . \overline{PSEN}$$
$$\overline{WRAM2} = \overline{B3} . \overline{WR} + \overline{B1} . \overline{PSEN}$$
$$\overline{CSRAM2} = \overline{B1} + \overline{B2} + \overline{B3}$$

Ce circuit 2 est donc un simple circuit logique câblé qui n'a rien à voir avec un dispositif de vol de cycle dit DMA, lequel est un véritable processeur annexe muni d'une horloge...

Dans le cas particulier du microprocesseur 8031, à chaque cycle de lecture de code opératoire, l'unité centrale lit deux octets à la fois dans la mémoire 4, c'est à dire que l'adresse saute deux pas. De ce fait, si l'on utilise un code à un seul octet, la valeur de l'adresse doit revenir en arrière pour le cycle suivant. Comme cette adresse est aussi celle utilisée par les deux modules 5, 6, ceci est inadmissible, car si l'on nomme a b c d la séquence de données successives à transférer (on entend par "donnée" l'information correspondant à une adresse, par exemple un octet si les mémoires sont des mémoires organisées par octets), avec une telle séquence d'adresses, les données reçues par le module destinataire seraient a b b c c d d...Cela n'entraine pas d'erreur car les deux données successives identiques sont bien placées à la même adresse, mais cela perd du temps. Pour cette raison, dans le cas particulier du processeur 8031, un code opératoire constitué de deux octets doit être choisi, par exemple un code "load register" ou "relation jump", qui peuvent être qualifiés d'inactifs vis-à-vis de l'unité centrale, dans le cadre de l'opération à réaliser.

Dans le cas d'un microprocesseur différent où l'incrémentation d'adresse lors d'un "fetch opcode" est d'un seul pas, un code NOP (No OPeration) peut être utilisé.

## Revendications

1. Dispositif pour transférer des données entre deux modules dans un système à microprocesseur muni d'une unité centrale avec un agencement de bus d'adresses et de données connecté à l'unité centrale et à une mémoire de codes opératoires, ainsi qu'aux deux modules, dispositif muni d'un interrupteur pour couper le bus de données, et de moyens distincts de ceux de l'unité centrale pour commander le transfert entre les modules, caractérisé en ce que ledit interrupteur est placé entre le groupe des deux modules d'une part, et le groupe constitué de l'unité centrale et de la mémoire de codes opératoires d'autre part.

2. Dispositif selon la revendication 1, caractérisé en ce que la mémoire des codes opératoires contient des codes opératoires inactifs dans les positions correspondant aux adresses présentes sur le bus d'adresses pendant l'opération de transfert.

3. Dispositif selon la revendication 2, caractérisé en ce que lesdits codes opératoires inactifs sont des codes de chargement de registre, ou des codes de saut conditionnel.

4. Dispositif selon la revendication 2, caractérisé en ce que lesdits codes opératoires inactifs sont des codes dits NOP ("no operation").

5. Dispositif selon l'une quelconque des revendications précédentes, caractérisé en ce que les susdits moyens distincts de ceux de l'unité centrale pour commander le transfert entre les modules réalisent à la fois la commande de lecture de l'un des modules et la commande d'écriture de l'autre et l'ouverture de l'interrupteur, et en ce que ces moyens sont constitués par un circuit de logique combinatoire.

6. Dispositif selon la revendication 5, caractérisé en ce que le circuit de logique combinatoire comporte un décodeur d'adresse relié au bus d'adresses.

7. Dispositif selon la revendication 6, caractérisé en ce que le décodeur d'adresse du circuit de logique combinatoire est relié seulement à certains fils du bus d'adresse, et les deux modules sont reliés seulement aux autres fils de ce bus d'adresse.

EP 0 431 688 A1

Office européen
des brevets

**RAPPORT DE RECHERCHE
EUROPEENNE**

Numéro de la demande

**EP 90 20 3161**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | REVIEW OF SCIENTIFIC INSTRUMENTS, vol. 55, no. 12, décembre 1984, pages 2017-2022, American Institute of Physics, Woodbury, New York, US; B.H. NEWCOME et al.: "Modular twin bus microprocessor system for laboratory automation"<br>* Page 2019, section II: "Dual-bus capability and application"; figure 5 *<br>— — — | 1 | G 06<br>F 13/40 |
| A | DE-A-3 224 034  (MITSUBISHI)<br>* Page 10, ligne 6 - page 11, ligne 16; figure 2 *<br>— — — — — | 1 | |

|  | | | DOMAINES TECHNIQUES RECHERCHES (Int. Cl.5) |
|---|---|---|---|
| | | | G 06 F 13 |

Le présent rapport de recherche a été établi pour toutes les revendications

| Lieu de la recherche | Date d'achèvement de la recherche | Examinateur |
|---|---|---|
| La Haye | 08 janvier 91 | MCDONAGH F.M. |